# EUROPEAN PATENT SPECIFICATION

(11) **EP 4 323 478 B1**
(45) Date of publication and mention of the grant of the patent: **22.10.2025**
(21) Application number: 22717681.5
(22) Date of filing: 14.04.2022
(51) Int. Cl.: C10L 3/10, C10L 3/08

(54) **COMPRESSION OF A BIOGAS CONTAINING CARBON DIOXIDE, AND USE THEREOF IN A COMBUSTION ENGINE**
VERDICHTUNG EINES KOHLENDIOXIDHALTIGEN BIOGASES UND SEINE VERWENDUNG IN EINEM VERBRENNUNGSMOTOR
COMPRESSION D'UN BIOGAZ CONTENANT DU DIOXYDE DE CARBONE ET SON UTILISATION DANS UN MOTEUR À COMBUSTION

(30) Priority: 16.04.2021 NL 2027997
(43) Date of publication of application: 21.02.2024
(73) Proprietor: Powercrumbs B.V., 6827 AV Arnhem (NL)
(72) Inventor: MANS, Pieter Willem Johan Laurens, 6827 AV Arnhem (NL); KALFF, Jelmer Robbert, 6827 AV Arnhem (NL); EISING, Jan Willem, 6827 AV Arnhem (NL)
(74) Representative: V.O.
(86) International application number: PCT/NL2022/050204
(87) International publication number: WO 2022/220681

(56) References cited:
- WO-A1-2013/087046
- WO-A1-2016/012309
- WO-A1-2019/185315
- US-A1- 2020 017 787
- WIJAYA I WAYAN GUNA ET AL: "The Effect of Methane and Carbon Dioxide Ratio in the Biogas to the Fuel Consumption of 2 Stroke Single Cylinder (63 cc) Engine of 750 Watt Electric Generator", vol. 877, 25 February 2021 (2021-02-25), pages 166 - 171, XP055869172, Retrieved from the Internet <URL:https://www.scientific.net/KEM.877.166.pdf> [retrieved on 20211203], DOI: 10.4028/www.scientific.net/KEM.877.166
- BRECQ GUILLAUME ET AL: "Knock prevention of CHP engines by addition of N2 and CO2 to the natural gas fuel", APPLIED THERMAL ENGINEERING, vol. 23, no. 11, 30 April 2003 (2003-04-30), GB, pages 1359 - 1371, XP055869193, ISSN: 1359-4311, DOI: 10.1016/S1359-4311(03)00063-2
- WONG JOHN K. S.: "Study of Mixtures of Methane and Carbon Dioxide as Fuels in a Single Cylinder Engine (CLR)", JOURNAL OF PHARMACEUTICAL SCIENCES, no. 770796, 2 January 1977 (1977-01-02), US, pages 1 - 7, XP055870903, ISSN: 0022-3549, Retrieved from the Internet <URL:https://doi.org/10.4271/770796>

## Description

The invention relates to the field of renewable energy. The invention is directed to a process of preparing a compressed fuel comprising carbon dioxide, and to the use of the compressed fuel as a fuel for a combustion engine.

Biogas is a valuable source of renewable energy. It is a product of a natural decomposition process of organic material, particularly through anaerobic digestion of the organic material. Biogas is a complex gas mixture that typically contains methane; carbon dioxide; carbon monoxide; ammonia; water vapour; hydrogen sulphide; siloxanes, and other trace constituents. The exact composition of the biogas and the quantities of each constituent depends on the biogas source. Of the biogas constituents, methane is considered to be the most important as it provides an interesting fuel material. Other constituents are mostly regarded as contaminants that lower the calorific value of biogas, as corrosives, and as components that hinder compression. Therefore, such constituents, including carbon dioxide, are typically removed from biogas to form a product that meets natural gas standards, *i.e.,* biomethane. The upgrading of biogas is an intensive process that requires a lot of processing steps, and hence is low energy efficient and costly.

Several studies focus on optimising the purification of biogas, thereby removing carbon dioxide to form nearly pure biomethane.

For example, US-A-2020/0 017 787 describes a method for partially purifying a biogas to obtain an intermediate product that can subsequently be transported to a centralised biogas upgrading facility where the partially purified biogas is further purified to renewable natural gas. As known to the skilled person, upgrading of biogas implies the removal of carbon dioxide. The method includes removing carbon dioxide from biogas by, for example, membrane separation, to form an alternative to natural gas, *i.e.,* renewable natural gas (RNG) or biomethane. Besides carbon dioxide, other constituents of biogas may be removed as well, such as nitrogen, water or hydrogen sulphide. The method does not provide for an energy-efficient way of purifying biogas, while forming a suitable fuel from biogas.

WO-A-2019/185315 describes a process for producing biomethane from biogas produced at distributed sites. The biogas is partially purified at each production site. The partially purifed biogas, which still contains a significant amount of carbon dioxide, is conditioned to a compressed gaseous or supercritical form at each production site for transportation to a central purification facility. At the central purification facility, biomethane is produced from the combined pre-purified biogas streams.

WO-A-2013/087046 describes a method wherein carbon dioxide is removed from biogas by means of pressure scrubbing with a physically active scrubbing agent with reduced methane slip. In order to ensure efficiency the method requires the biogas to be almost completely desulphurised upstream of the pressure scrubbing. In the example, pressure scrubbing is performed at a pressure of 7 bar and reduces the carbon dioxide content of the biogas from 44 % by volume to 1.08 % by volume.

WO-A-2008/115079 describes a process for treating biogas that is particularly directed to the removal of hydrogen sulphide from biogas. With the process, biogas is upgraded such that the methane content is increased to obtain a biomethane fuel. To obtain the biomethane, hydrogen sulphide and other constituents, including carbon dioxide, are removed from the biogas. While this leads to biomethane having a high methane content, the process is not energy-efficient and cost-effective for relatively small biogas production sites.

WO-A-2021/003564 describes a method of producing purified and upgraded biogas fuel. While the method leads to a renewable natural gas fuel having a high methane content, the removal of carbon dioxide renders it less energy-efficient and relatively costly for smaller biogas production sites.

WO-A-2016/012309 discloses a method for upgrading biogas and production of ammonium sulphate that comprises condensing a biogas to reduce water content, pressurising the biogas to a pressure of about 5 to 25 bar, separating hydrogen sulphide from the pressurised biogas and converting the hydrogen sulphide into sulphuric acid, and reacting the sulphuric acid with ammonia to produce ammonium sulphate.

WIJAYA I WAYAN GUNA ET AL: "The Effect of Methane and Carbon Dioxide Ratio in the Biogas to the Fuel Consumption of 2 Stroke Single Cylinder (63 cc) Engine of 750 Watt Electric Generator", KEY ENGINEERING MATERIALS, vol. 877 25 February 2021 (2021-02-25), pages 166-171, DOI: 10.4028/ www.scientific.net/KEM.877.166; BRECQ GUILLAUME ET AL: "Knock prevention of CHP engines by addition of N2 and CO2 to the natural gas fuel", APPLIED THERMAL ENGINEERING, vol. 23, no. 11, 30 April 2003 (2003-04-30), pages 1359-1371, DOI: 10.1016/S1359-4311(03)00063-2; and WONG JOHN K. S.: "Study of Mixtures of Methane and Carbon Dioxide as Fuels in a Single Cylinder Engine (CLR)", SAE TECHNICAL PAPER NO. 770796, 2 January 1977 (1977-01-02), pages 1-7, each describe the use of methane fuels containing at least 10 mol% carbon dioxide in a combustion engine.

There remains a need in the art for an improved process of converting biogas to a compressed fuel, while requiring minimum effort and energy to produce, and while maintaining good energy value. In particular, such compressed fuel from biogas would provide a suitable alternative to fossil fuels.

It is an objective of the invention to address this need in the art. Another objective of the invention is to reduce the processing steps required to obtain a compressed fuel. Another objective of the invention is to improve the (energy) efficiency of producing compressed fuel from biogas. Another objective of the invention is to provide a compressed fuel for further use in a combustion engine. Another objective of the invention is to provide an alternative to traditional fossil fuels.

The inventors surprisingly found that one or more of these objectives can, at least in part, be met by compressing a purified biogas that still comprises significant amount of carbon dioxide.

Accordingly, in a first aspect, the invention is directed to a process of preparing a compressed fuel, comprising:
- providing a biogas;
- removing one or more components from the biogas to obtain a purified biogas, wherein the purified biogas has a methane content of 30 mol% or more and a carbon dioxide content of 10 mol% or more,
- compressing the purified biogas to a pressure of 100 - 350 bara to form a compressed fuel, and using the compressed fuel having a methane content of 30 mol% or more and a carbon dioxide content of 10 mol% or more as a fuel for a combustion engine.

The compressed fuel is a material that can release thermal energy upon reaction. The compressed fuel is a biofuel. In particular, the compressed fuel is suitable for combustion in combustion engines, such as gas engines. Hence, the compressed fuel is an engine fuel. The engine fuel can power machines, including vehicles and machine tools. Preferably, the compressed fuel is a vehicle fuel, such as a construction vehicle fuel or an agricultural vehicle fuel or a mobile generator fuel. The process is a process of producing a vehicle fuel, especially a vehicle biofuel, comprising, or consisting of, compressed fuel. Compared to known purification processes of biogas, the invention takes a new and innovative approach to improve the efficiency of biogas purification and compression, while forming a suitable fuel.

The production process comprises providing a biogas. Biogas can originate from, for example, natural processes or industrial processes. Hence, at least part of the biogas used in the production process can originate from a natural process or an industrial process. The biogas can comprise a part originating from a natural process and a part originating from an industrial process. The biogas can be directly obtained from a natural process and/or an industrial process, and can thus be considered a raw biogas. Such biogas can contain up to 80 vol.% of methane; up to 65 vol.% of carbon dioxide; up to 2 to 3 vol.% of hydrogen sulphide; several volume percent of hydrogen, such as up to 1 or 2 vol.%; nitrogen; oxygen and carbon monoxide; water, and traces of ammonia; siloxanes; solids, *etc.* The biogas used in the process can have such a composition. Optionally, the biogas comprises a part pre-treated raw biogas from which, for example, solids, liquids and/or gas have been removed. The natural process includes the breakdown of organic material, specifically biogenic material. The breakdown of such material, for example, by bacterial digestion, such as anaerobic digestion, forms a biogas. The organic material can comprise manure, plant material (such as crops), food material, and/or waste, such as sewage and effluent. In view of reducing the carbon footprint, the biogas can originate from a biogas source that is near, or at, the location where the compressed fuel is produced.

The process further comprises removing one or more components from the biogas. The component, or components, that are removed may be considered harmful to the environment. Such components are, for example, particulates, including atmospheric particulate matter, and nitrogen. Hence, particulates and/or nitrogen may be removed from the biogas. The one or more components that are removed from the biogas can be selected from the group consisting of halogen compounds, nitrogen compounds, silicon compounds, sulphur compounds and water. In principle, methane is, or carbon dioxide and methane are, not removed from the biogas. Whereas known processes to prepare compressed fuel require the removal of carbon dioxide from biogas (upgrading) to store and transport compressed fuel, the inventors surprisingly found that biogas comprising a significant level of carbon dioxide can be compressed at relatively high pressures for storage and transportation.

Halogen compounds can include compounds that carry halogen atoms, such as halogenated hydrocarbons.

Nitrogen compounds can include organic nitrogen, ammonia, nitrogen oxides and nitrogen (gas). Preferably, nitrogen compounds are removed from the biogas to, for example, reduce nitrogen emission in line with possible laws regulating nitrogen emissions.

Silicon compounds can particularly include siloxanes and/or silanes, preferably siloxanes. Silicon compounds, particularly siloxanes and/or silanes, are preferably removed from the biogas as upon combustion silicon can be released and deposited. Such deposits can, for instance, have serious detrimental consequences in engine operations, such as engine failure. Non-purified biogas, typically contains siloxanes such as hexamethyldisiloxane in amounts of up to 50 mg/Nm³, which is far beyond the limit set by several engine manufacturers of 15 mg/Nm³. Siloxanes are water-insoluble and have a surprisingly high vapour pressure.

Sulphur compounds can include all sorts of sulphur-containing compounds, particularly inorganic sulphur compounds, such as hydrogen sulphide. Sulphur compounds, especially hydrogen sulphide, are preferably removed as they tend to form corrosives and potentially environmentally hazardous compounds.

Water, for example, in the form of water vapour, reduces the calorific value of biogas. In addition, water tends to contribute to the formation of corrosives. Furthermore, the presence of water can hinder the pressurisation to high pressures. Hence, water is preferably removed from the biogas.

The components can be removed from the biogas using one or more suitable techniques. These techniques constitute of purification processes that remove components from biogas through, for example, absorption, adsorption and/or scrubbing. For example, the removing of the one or more components from biogas can comprise one or more techniques selected from adsorption on activated carbon, chilling, temperature swing adsorption, pressure swing adsorption, amine swing absorption, scrubbing, cryogenic separation, and membrane separation.

In particular, the removing comprises adsorption on activated carbon, chilling and temperature swing adsorption, preferably in that order. For example, the biogas may first pass a section comprising adsorption on activated carbon, followed by a section comprising chilling and a section comprising temperature swing adsorption. Adsorption on activated carbon may primarily adsorb siloxanes and sulphur compounds. Chilling, or cooling, may remove water from the biogas. Temperature swing adsorption may provide a further drying of the biogas to further remove water. The chilling may be performed at a pressure of up to 2 bara and/or at a temperature of between 0-10 °C, or 0-4 °C, such as at about 2 °C.

The adsorption on activated carbon can comprise passing biogas through the activated carbon, for example by passing the biogas over an activated carbon filter. The activated carbon primarily removes hydrogen sulphide and siloxanes from the biogas. The removal is based on interactions between the hydrogen sulphide/siloxanes and the activated carbon pore surface in presence of oxygen to form sulphides and hydrogen. The process is typically done in gas phase at low temperatures and pressures. In order to prevent condensation of liquid in the activated carbon filter the gas is preferably heated before it enters the activated carbon filter. To improve the hydrogen sulphide removal capacity, the activated carbon may be impregnating with one or more chemicals, such as Zn, HNO₃, K₂CO₃, NaOH and alkaline chemicals. The activated carbon requires regeneration with oxygen, either periodically or continuously. Suitable activated carbons include granular activated carbon (GAC), extruded activated carbon (EAC) and activated carbon filter (ACF).

The chilling and temperature swing adsorption primarily removes water from the biogas. Thermal Swing Adsorption is based on adsorption at operating conditions and regeneration at an elevated temperature. The adsorption capacity of an adsorbent at higher temperature is lower than at lower temperatures. Using this physical aspect removal of components from gases (in particular drying of gases) is possible with porous solid adsorbents, such as carbon molecular sieves (CMS), activated carbons, zeolites and titanosilicates.

The removal of one or more components from the biogas results in a purified biogas. The purified biogas comprises carbon dioxide, and has a carbon dioxide content of 10 mol% or more. The carbon dioxide content can be 15 mol% or more, such as 20 mol% or more, 25 mol% or more, 30 mol% or more, 35 mol% or more, and/or, for example, 70 mol% or less, such as 65 mol% or less, 60 mol% or less, 55 mol% or less, 50 mol% or less, or 45 mol% or less. Preferably, the carbon dioxide content in the purified biogas is 15-50 mol%, such as 20-45 mol% or 25-40 mol%.

The process of the invention does not require to remove carbon dioxide to a level lower than 10 mol% prior to pressurising to 100-350 bara. The inventors surprisingly found that biogas comprising a carbon dioxide content as described in this disclosure can be compressed up to pressures as mentioned in this disclosure, such as reaching, for example, 300 bara without phase separation occurring. By keeping carbon dioxide in the purified biogas, the process becomes more (energy) efficient and less costly because less energy and material is required to obtain purified biogas. Since a significant amount of carbon dioxide remains in the purified biogas, no special purification steps for removing carbon dioxide are required, thereby reducing process time and operational costs. A further advantage is that the environment is less stressed during the purification, while still forming a suitable fuel.

Of the carbon dioxide content (in mol%) in the non-purified biogas, less than 75 % may be removed in the purification prior to pressurising. In particular, less than 65 % of the carbon dioxide content in the original biogas may be removed in the purification prior to pressurising, such as 50 % or less, 40 % or less, 35 % or less, 30 % or less, 25 % or less, or 20 % or less. Preferably, less than 10 % of the carbon dioxide content in the non-purified biogas is removed in the purification prior to pressurising, such as 5 % or less, 3 % or less, 2 % or less, or 1 % or less. Most preferably, essentially no carbon dioxide is removed from the non-purified biogas in the purification prior to pressurising. This may be particularly suitable when the biogas has a carbon dioxide content of, for example, up to 60 % by total volume of the non-purified biogas, such as 55 % or less, 50 % or less, 45 % or less, or 40 % or less.

In a preferred embodiment, the purified biogas comprises
- 5 ppm by weight or less of hydrogen sulphide, such as 2 ppm by weight or less; and/or
- 60 ppm by weight or less of water, such as 40 ppm by weight or less; and/or
- 10 mg/Nm³ or less of siloxanes, such as 5 mg/Nm³ or less; and/or
- 30 mol% or more of carbon dioxide, such as 40 mol% or more; and/or
- 40 mol% or more of methane, such as 50 mol% or more; and/or
- 0-1.5 mol% of oxygen, such as 0.2-1.0 mol%; and/or
- 0-10 mol% of nitrogen, such as 1-8 mol%.

The process further comprises compressing the purified biogas. Typically, a compressor is used for compression. Hence, the purified biogas can be compressed using one or more compressors. The one or more compressors may be designed to compress a purified biogas comprising carbon dioxide in amounts given in this disclosure, in particular of up to 40 mol%, such as 25-40 mol%.

Prior to compression, the purified biogas may optionally pass a pre-pressure vessel, where the biogas is stored prior to compression in order to cushion start/stop fluctuations.

The one or more compressors may be part of a filling station. The compressing of the purified biogas forms a compressed fuel. The compressed fuel can attractively be used over limited transport distances from, e.g., small to medium-sized biogas production sites. Such transportation logistics make low-cost, low-energy dense compressed fuel according to the invention attractive.

The process can comprise a (pre-)treatment step to be performed before or after compression, wherein the purified biogas is cooled to below a (water) dewpoint.

The purified biogas can be compressed under a pressure of 100 bara or more, such as 110 bara or more, 120 bara or more, 130 bara or more, 140 bara or more 150 bara or more, 160 bara or more, or 170 bara or more. The purified biogas can be compressed under 350 bara or less, such as 330 bara or less, 310 bara or less, 300 bara or less, 280 bara or less, 260 bara or less, 240 bara or less, 220 bara or less, 220 bara or less, or 200 bara or less. Preferably, the purified biogas is compressed under a pressure of 100-350 bara, such as 100-300 bara, 100-280 bara, or 150-250 bara. More preferably, the purified biogas is compressed under 110-250 bara, such as 150-210 bara.

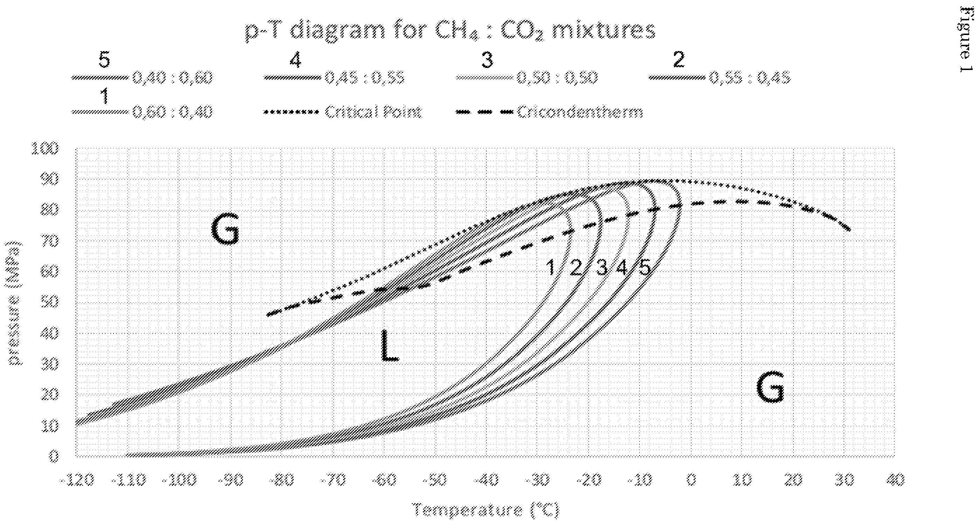

The pressure and/or temperature during, or after, the compression may affect the state of the compressed fuel. For example, the compressed fuel can be in a gaseous state or supercritical state. Preferably, the conditions are set such that the carbon dioxide or any other component in the compressed fuel does not enter a liquid state. Should water vapour be present in the purified biogas, it is preferred that condensation of the water vapour is prevented. Liquid water may contribute to corrosion. In that case, the liquid/gas phase line should not be crossed. It is preferred to follow an isentropic line to steer away from the liquid phase. For example, the operating conditions may be set as such that the cricondentherm, cricondenbar and/or the area between those points in a pressure versus temperature graph, are not reached during compression or decompression, during storage and transport of the compressed fuel. The cricondentherm is the maximum temperature at which condensation occurs, and the cricondenbar is the maximum pressure at which condensation occurs. The inventors have calculated the cricondentherm for different gas mixtures. In figure 1, a graph is depicted for mixtures 1-5 having varying ratios between methane and carbon dioxide. In the graph, pressure and temperature are plotted. The graph further shows under what conditions the mixtures are in a gas state G or liquid state L. The inventors found that the temperature of the cricondentherm and the pressure of the cricondenbar will be higher with increased carbon dioxide contents. Cooling to temperatures below 0 °C, such as -10 °C or below, -20 °C or below, or -30 °C or below increases costs and reduces the economic viability. It is preferred to perform the compressing step at a temperature above the cricondentherm of the purified biogas.

The compressed fuel may be kept under pressure in a pressure vessel. The pressure vessel may be transportable from one location to another location via any means of transportation, especially by vehicle, such as a truck. Preferably, the pressure vessel is transportable. Hence, with the process as described in this disclosure the compressed fuel can be kept under pressure in a pressure vessel. The pressure vessel can be any container that is designed to hold fuel, in particular the compressed fuel as described in this disclosure, at a pressure as described in this disclosure. The pressure at which the compressed fuel can be kept may be any pressure given in this disclosure, such as the pressure at which the purified biogas is compressed. The compressed fuel is kept at a pressure of 100 bara or more, such as 100-280 bara, or 150-250 bara.

Typical pressure vessels for transporting compressed fuel are made of steel. Although such pressure vessels are commonly accepted and used, they are to a certain level sensitive to corrosion. In case the pressure vessel for transporting the compressed fuel is made of synthetic material and/or composite material, these molar ratios may be less relevant.

Optionally, the compressed fuel, or part thereof, undergoes further treatment, such as filtering to remove contaminants, e.g., oil (including traces of compressor lubricant) and water. Such filtering may be performed using molecular sieves.

The compressed fuel comprises constituents of the provided biogas, especially methane and carbon dioxide. The compressed fuel can have a weight ratio between methane to carbon dioxide of 1 : 0.05 or more, and, for example, 1 : 0.67 or less. The weight ratio between methane to carbon dioxide can be 1 : 0.15 to 1 : 0.50, such as 1 : 0.20 to 1 : 0.45. Preferably, the weight ratio is 1 : 0.25 to 1 : 0.40.

The compressed fuel can have a molar ratio between methane to carbon dioxide of 90 : 10 to, for example, 50 : 50. The molar ratio can be 85 : 15 to 55 : 45. Preferably, the molar ratio is 80 : 20 to 60 : 40, such as 75 : 25 to 65 : 35.

The amount of silicon compounds (including siloxanes and silanes) in the compressed fuel is preferably 10 mg/Nm³ or less, such as 5 mg/Nm³ or less, 4 mg/Nm³ or less, 3 mg/Nm³ or less, or 2 mg/Nm³ or less. The presence of too much silicon compounds may render the compressed biogas unsuitable as a fuel. Nm³ refers to normal cubic metre, being the amount of gas which occupies a cubic meter at a temperature of 273.15 K and at a pressure of 101.325 kPa.

The process of the invention described in this disclosure provides a compressed fuel. The obtained compressed fuel is used in a combustion engine as described in this disclosure.

The compressed fuel comprises a carbon dioxide content of 10 mol% or more, such as 15 % or more, or 20-45 %, wherein the compressed biogas is under a pressure of 100-350 bara. The compressed biogas can be in, for example, a gas state or a supercritical state.

The carbon dioxide content in the compressed fuel can be 15 mol% or more, such as 20 mol% or more, 25 mol% or more, 30 mol% or more, or 35 mol% or more, and/or, for example, 70 mol% or less, such as 65 mol% or less, 60 mol% or less, 55 mol% or less, 50 mol% or less, or 45 mol% or less. Preferably, the carbon dioxide content is 15-50 mol%, such as 20-45 mol% or 25-40 mol %.

The methane content in the compressed fuel is 30 mol% or more. Preferably, the methane content is 35 mol% or more, 40 mol% or more, 45 mol% or more, 50 mol% or more, or 55 mol% or more, and/or, for example, 90 mol% or less, such as 85 mol% or less, 80 mol% or less, 75 mol% or less, 70 mol% or less, or 65 mol% or less. Preferably, the compressed fuel has less than 90 mol% methane, such as 80 mol% or less. More preferably, the methane content in the compressed fuel is 50-90 mol%, such as 55-90 mol% or 60-90 mol%.

The compressed fuel can have a weight ratio between methane to carbon dioxide of 1 : 0.05 or more, and, for example, 1 : 0.67 or less. The weight ratio between methane to carbon dioxide can be 1 : 0.15 to 1 : 0.50, such as 1 : 0.20 to 1 : 0.45. Preferably, the weight ratio is 1 : 0.25 to 1 : 0.40.

The compressed fuel can have a molar ratio between methane to carbon dioxide of 90 : 10 to, for example, 50 : 50. The molar ratio can be 85 : 15 to 55 : 45. Preferably, the molar ratio is 80 : 20 to 60 : 40, such as 75 : 25 to 65 : 35.

The compressed fuel is kept under a pressure of 100 bara or more. The pressure can be 300 bara or less, such as 270 bara or less or 250 bara or less. In particular, the compressed fuel can be under a pressure of 110 bara or more, such as 130 bara or more, and/or 280 bara or less, such as 260 bara or less, 240 bara or less, 220 bara or less, 200 bara or less, or 180 bara or less. Preferably, the compressed fuel is under a pressure of 100-300 bara, such as 100-280 bara, or 150-250 bara. More preferably, the compressed biogas is under a pressure of 110-250 bara, such as 150-210 bara. Advantageously, due to the purity the compressed fuel can be kept under high pressures for extended periods of time without significantly degrading.

In a preferred embodiment, the compressed fuel as described herein comprises
- 5 ppm by weight or less of hydrogen sulphide, such as 2 ppm by weight or less; and/or
- 80 ppm by weight or less of water, such as 70 ppm by weight or less, or 50 ppm by weight or less; and/or
- 10 mg/Nm³ or less of siloxanes, such as 5 mg/Nm³ or less; and/or
- 30 mol% or more of carbon dioxide, such as 40 mol% or more; and/or
- 40 mol% or more of methane, such as 50 mol% or more.

The invention is directed to the use of a compressed fuel as an engine fuel. The compressed fuel comprises carbon dioxide and methane as described above. The engine fuel can be a vehicle fuel. It can be used for direct driving an engine, boiler, burners, or for electricity to power the grid or other electricity end users.

The compressed fuel of the invention is a clean fuel and has low levels of hazardous emissions. In particular, the compressed fuel of the invention is advantageously low in emission of NOₓ and particulate matter.

The invention has been described by reference to various embodiments, and methods. The skilled person understands that features of various embodiments and methods can be combined with each other.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (*i.e.,* meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention. For the purpose of the description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

When referring to a noun in the singular, the plural is meant to be included, or it follows from the context that it should refer to the singular only.

Preferred embodiments of this invention are described herein. Variation of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject-matter recited in the claims appended hereto as permitted by applicable law. Moreover, any combination of the above-described elements in all possible variations thereof is encompassed by the invention unless otherwise indicated herein or otherwise clearly contradicted by context. The claims are to be construed to include alternative embodiments to the extent permitted by the prior art.

For the purpose of clarity and a concise description, features are described herein as part of the same or separate embodiments, however, it will be appreciated that the scope of the invention may include embodiments having combinations of all or some of the features described.

Hereinafter, the invention will be illustrated in more detail by means of specific examples. However, the invention may be embodied in many different forms and should not be construed as being limited to the embodiments set forth herein. Rather, these example embodiments are provided so that this description will be thorough and complete, and will fully convey the scope of the invention to those skilled in the art.

### Examples

### Example 1

### Test results CO₂/CH₄ mixture

The following measurements were performed for a mixture of methane and carbon dioxide. The mixture has a methane to carbon dioxide molar ratio of 60 : 40. The ratio was controlled by pump opening of separate methane and carbon dioxide cylinders for a ratio between carbon dioxide (0.2) and methane (0.3).

During a period of about 80 minutes, the mixture was compressed up to about 160 bara. The experiment was done such that it could be performed at ambient temperature and without a significant influence of temperature increase due to compression. At multiple time intervals the weight and volume of the mixture were measured. The weight was measured with a Sartorius Industry I 8100P and the volume was measured with a bellows gas meter. In table 1, a summary of the input and output parameters of the measurement are given. Those output parameters refer to the weight of the mixture (m) and its cumulative change in volume (ΣV₀).

**Table 1. Values during compression**

| t (min) | m (g) | p (bar) | V (m³) | ΔV₀ (m³) | ∑V₀ (dm³) |
|---|---|---|---|---|---|
| 0 | 0 | 1.01 | 52227.93 | 0 | 0 |
| 3 | 24 | 10.26 | 52227.96 | 0.036 | 35.6 |
| 10 | 165 | 27.76 | 52228.07 | 0.118 | 153.9 |
| 18 | 312 | 48.01 | 52228.20 | 0.139 | 292.7 |
| 27 | 489 | 70.76 | 52228.36 | 0.167 | 460.1 |
| 37 | 663 | 91.76 | 52228.52 | 0.164 | 624.4 |
| 45 | 787 | 108.01 | 52228.63 | 0.117 | 741.6 |
| 49 | 854 | 113.01 | 52228.69 | 0.063 | 804.9 |
| 55 | 962 | 125.26 | 52228.78 | 0.103 | 907.8 |
| 58 | 1002 | 129.51 | 52228.82 | 0.036 | 944.1 |
| 63 | 1087 | 139.51 | 52228.89 | 0.082 | 1025.8 |
| 68 | 1160 | 148.01 | 52228.96 | 0.070 | 1096.0 |
| 73 | 1215 | 154.26 | 52229.01 | 0.052 | 1147.8 |
| 78 | 1255 | 159.01 | 52229.05 | 0.042 | 1189.6 |
| 79 | 1265 | 159.76 | 52229.06 | 0.013 | 1202.9 |

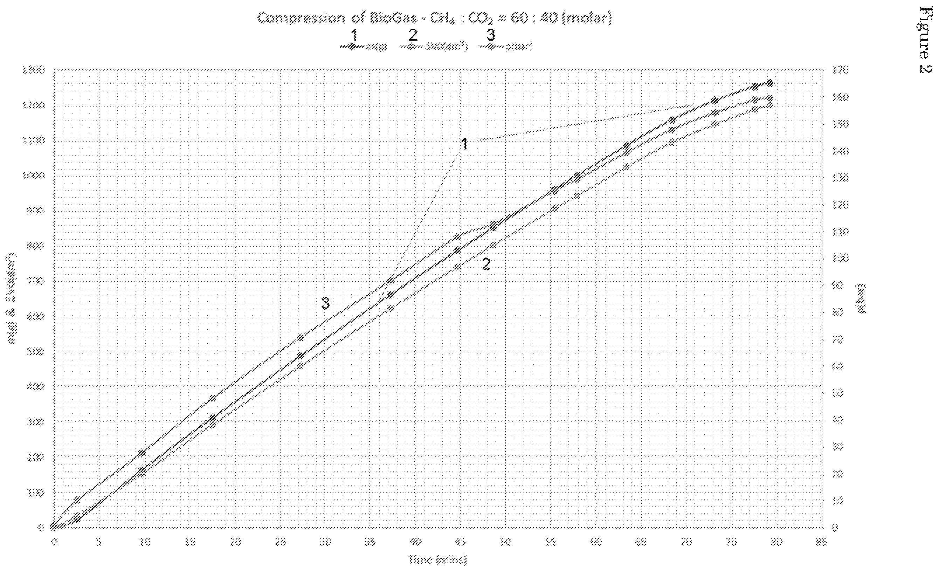

Figure 2 depicts a graph for the mixture, wherein the time, pressure, weight and cumulative change in volume are plotted.

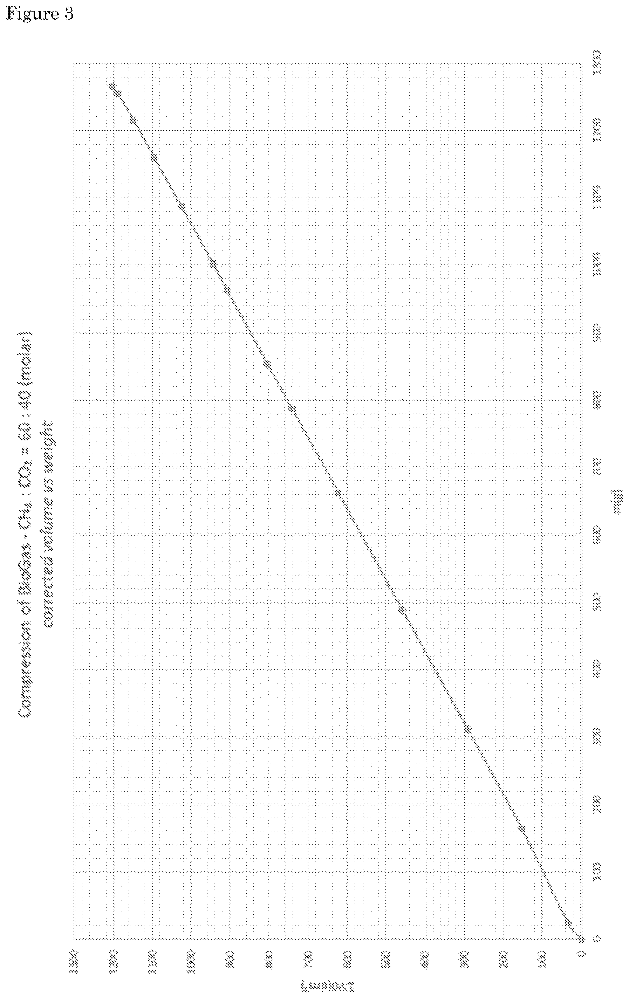

Figure 3 shows a graph wherein the corrected volume and the weight of the mixture during compression are plotted. The graph shows a straight line, which indicates that there are no anomalies during compression and that the biogas can be used as fuel due to the stable behaviour of the biogas mixture, even when compressed to a supercritical state.

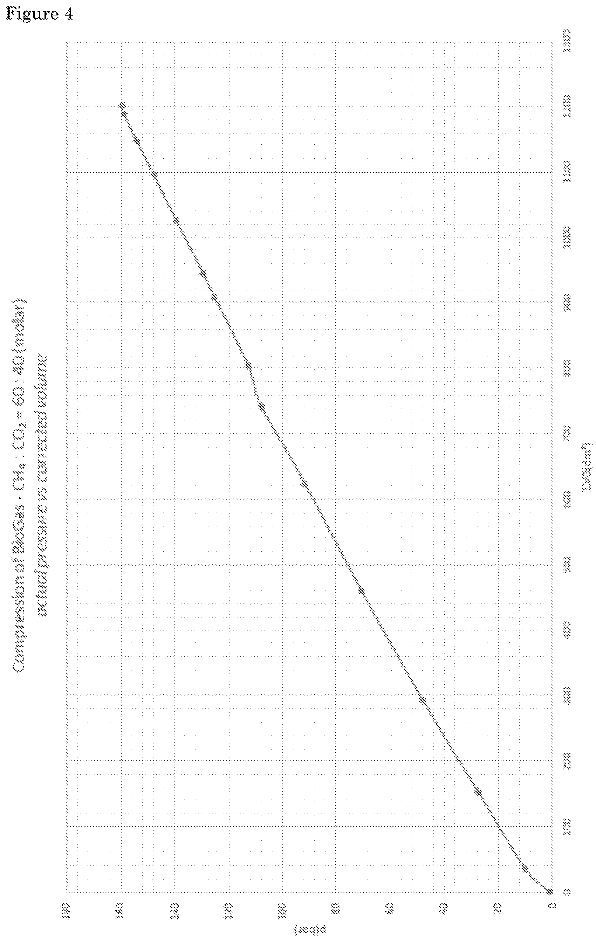

In figure 4, a graph is depicted wherein the actual pressure and the corrected volume of the mixture during compression are plotted. Again, the graph shows a relatively straight line.

Decompression measurements for the compressed mixture were also performed. The mixture was decompressed from about 140 bara to about 30 bara. At multiple pressure intervals the weight and the volume of the mixture were measured. The molar ratio of methane to carbon dioxide was also determined by a gas chromatograph. In table 2, a summary of the input and output parameters of the measurement is given. The input parameter refers to the pressure of the mixture, and the output parameters refer to the weight (m), volume (V) and mole percentages of methane and carbon dioxide as measured at four different pressure values.

**Table 2. Values during decompression**

| t (min) | m (g) | p (bar) | CH₄.norm (mol%) | CO₂.norm (mol%) |
|---|---|---|---|---|
| 141 | 8349 | 52229.06 | 62.5 | 37.5 |
| 136 | 8309 | 52229.10 | ND | ND |
| 128 | 8238 | 52229.16 | ND | ND |
| 120 | 8154 | 52229.24 | 62.7 | 37.4 |
| 110 | 8031 | 52229.36 | ND | ND |
| 100 | 7924 | 52229.47 | ND | ND |
| 80 | 7719 | 52229.66 | ND | ND |
| 70 | 7607 | 52229.77 | 62.4 | 37.6 |
| 60 | 7519 | 52229.85 | ND | ND |
| 50 | 7433 | 52229.94 | ND | ND |
| 39 | 7349 | 52230.02 | ND | ND |
| 30 | 7280 | 52230.08 | 62.5 | 37.5 |
| 29 | 7275 | 52230.10 | ND | ND |

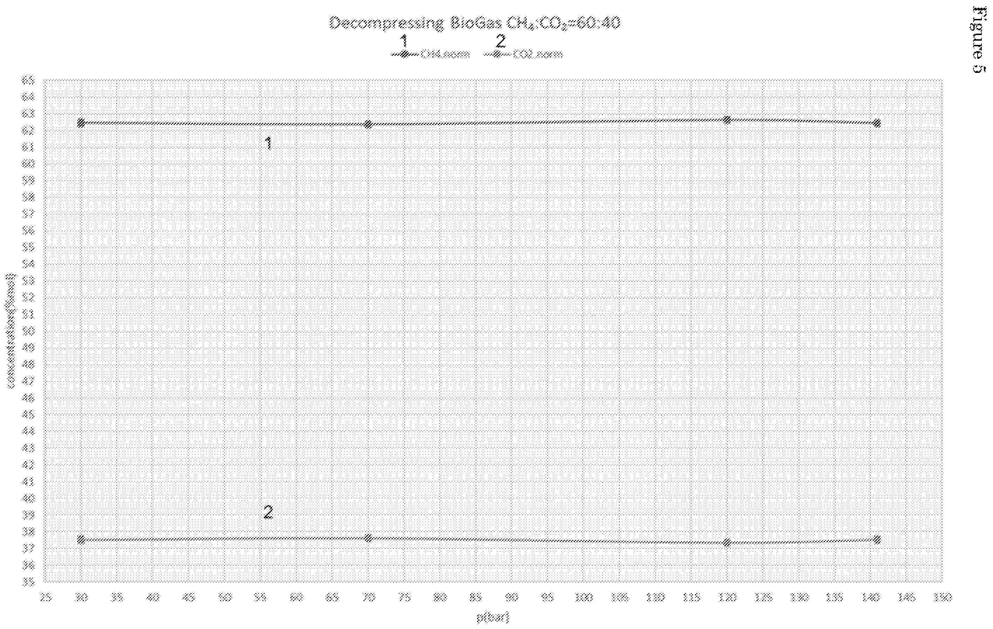

Figure 5 depicts a graph for the mixture during decompression, wherein the mole percentages and the pressure are plotted. The measurements show that upon decompressing the molar ratio does not significantly change. The uncertainty in the measurement of the pressure is 0.2 bara and of the mole percentages is 0.2 mol%.

The measurements show that a 60 : 40 mixture of methane to carbon dioxide can remain in the gas phase when compressed to 160 bara. In addition, the ratio of methane to carbon dioxide remains about the same upon decompression.

These measurements prove that the process in this disclosure can generate a carbon dioxide-containing compressed fuel, without having to remove carbon dioxide from the biogas.

### Test results purified biogas

The following measurements were performed for a purified biogas mixture of methane and carbon dioxide. The mixture has a methane to carbon dioxide molar ratio of 60 : 40. The mixture comprised 0 ppm hydrogen sulphide (below the detection limit).

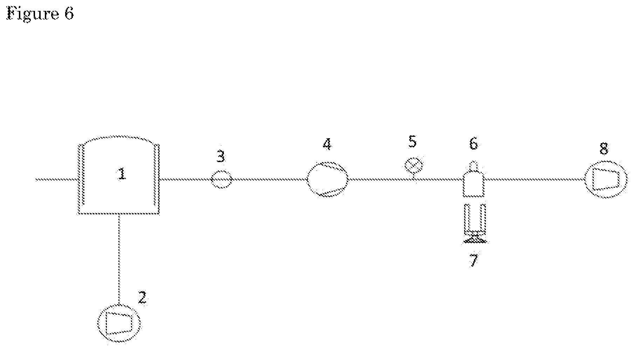

In figure 6, the test setup is shown schematically. The dew point of a purified biogas mixture from storage 1 measured 3 at 0 °C and 1 atm was -44 °C. The mixture was compressed using a Sauer compressor WP4341, having a capacity of 60 m³/h. The pressure was measured using a pressure measuring device 5 (WIKA E10; accuracy of < 0.25 % (best fit straight line), and deviation of 0.75 bar). The compressed mixture was stored in BUSE gas cylinders of 9 × 80 liter (0.72 m³) 6. The starting weight of the mixture at 0 °C and 1 atm was 1.226 kg/m³. The weight of the gas cylinders was determined using a weighing pallet truck 7 (accuracy of 0.1 % of the nominal capacity and a 2 kg deviation). A temperature laser sensor was used to measure the temperature of the gas cylinders. A QVT44 gas engine 8 was powered by the purified biogas.

During a period of about 183 minutes, the mixture was compressed up to about 198 bara. At multiple time intervals the weight and temperature of the mixture were measured. In table 3, a summary of the output parameters of the measurement is given. Those output parameters refer to the weight change of the mixture (Δm) and the temperature (°C).

**Table 3. Compressing purified biogas**

| t (min) | p (bara) | Δm (kg) | T (°C) |
|---|---|---|---|
| 0 | 3 | 0 | 15 |
| 20 | 35 | 27 | ND |
| 30 | 44 | 39 | ND |
| 50 | 68 | 63 | ND |
| 60 | 78 | 75 | ND |
| 94 | 108 | 111 | ND |
| 110 | 126 | 132 | ND |
| 130 | 149 | 154 | ND |
| 143 | 155 | 166 | ND |
| 153 | 166 | 177 | ND |
| 164 | 177 | 188 | ND |
| 174 | 188 | 199 | ND |
| 183 | 198 | 208 | 35 |

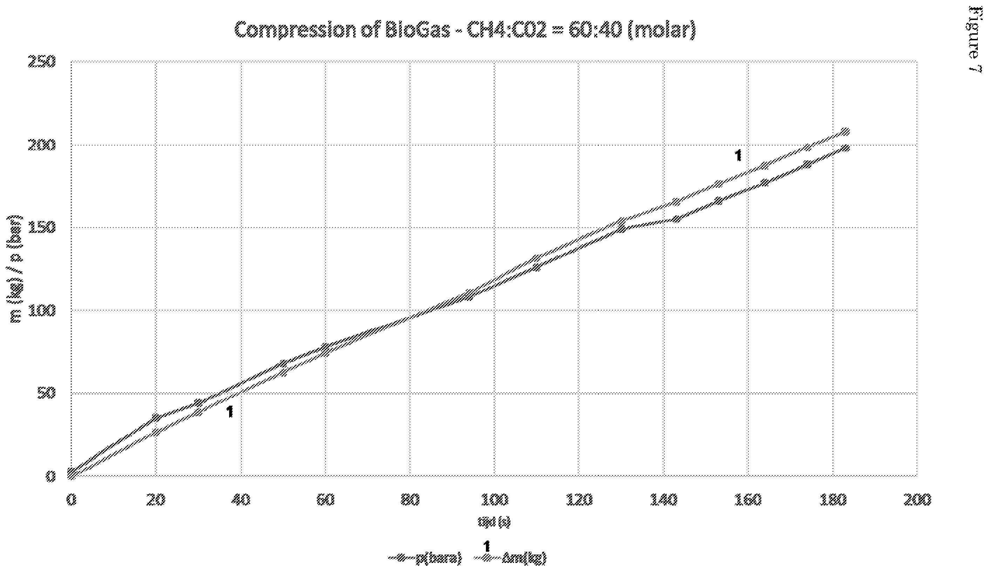

Figure 7 depicts a graph for the mixture, wherein the time, pressure and weight are plotted.

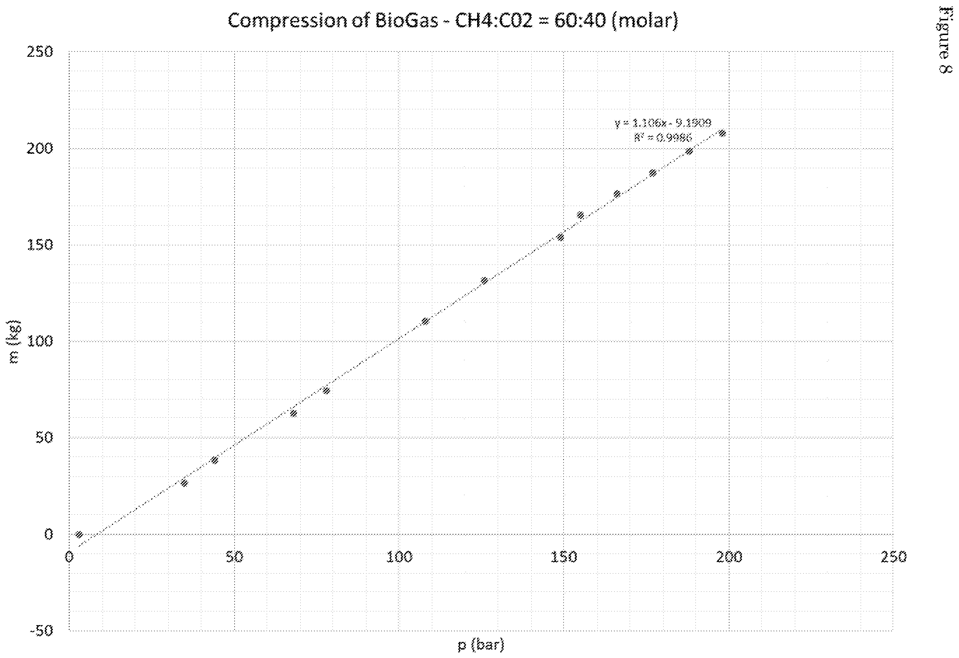

Figure 8 depicts a graph for the mixture, wherein the pressure and weight are plotted. The graph shows a nearly straight line.

Decompression measurements for a compressed biogas mixture were also performed. The mixture was decompressed to about 75 bara. At multiple pressure intervals mole percentages of methane, carbon dioxide and oxygen was determined using a Dräger X-am 7000. In table 4, a summary of the input and output parameters of the measurement is given. The input parameter refers to the pressure of the mixture and the output parameter to the mole percentages of methane, carbon dioxide and oxygen.

**Table 4. Biogas decompression**

| t (min) | p (bara) | CH₄ (mol%) | CO₂ (mol%) | O₂ (mol%) |
|---|---|---|---|---|
| 0 | ND | 59.8 | 39.6 | 0.6 |
| 60 | 138 | 59.8 | 39.6 | 0.6 |
| ND | 130 | 59.8 | 39.6 | 0.6 |
| 100 | 120 | 59.8 | 39.6 | 0.6 |
| 115 | 110 | 60.0 | 39.5 | 0.5 |
| 130 | 100 | 59.4 | 40.1 | 0.5 |
| ND | 90 | 59.4 | 40.1 | 0.5 |
| 180 | 80 | 60.0 | 39.5 | 0.5 |
| ND | 75 | 60.3 | 39.7 | 0.5 |

### Example 2

Compressed fuel was obtained by passing biogas over an activated carbon bed, drying the biogas in a chiller and subsequently subjecting the biogas to temperature swing adsorption. Subsequently, the purified biogas was pre-pressurised in a pre-pressure vessel after which it was compressed to a pressure of 70 bara (not according to the invention), and subjected to filtration.

The compressed fuel was analysed for its composition. The following components were present in the compressed fuel in the amounts indicated in Table 5. The gas composition was analysed in accordance with ISO 6974:2016 Nitrogen and carbon dioxide were detected using gas chromatography (Interscience Thermo Scientific Trace 1300 Gas chromatograph). The other components were detected using a temperature programmed gas chromatograph with a capillary column (Interscience Thermo Scientific Trace 1300 Gas chromatograph) and a mass selective detector (Interscience Thermo Scientific ISQ QD SQMS). For hydrogen sulphide and sulphur dioxide a selective analysis of sulphur was performed using selective ion monitoring. For hexamethyldisiloxane and total silicon a selective analysis of siloxanes was performed using selective ion monitoring.

**Table 5. Compressed fuel composition**

| | |
|---|---|
| carbon dioxide | 37.3 mol% |
| methane | 55.1 mol% |
| hydrogen sulphide | - ^{a} |
| sulphur dioxide | - ^{a} |
| hexamethyldisiloxane | - ^{a} |
| total silicon | - ^{a} |

| | |
|---|---|
| ^{a} below detection limit (< 0.01 ppm) | |

## Claims

1. Process of preparing a compressed fuel, comprising:
- providing a biogas,
- removing one or more components from the biogas to obtain a purified biogas, wherein the purified biogas has a methane content of 30 mol% or more and a carbon dioxide content of 10 mol% or more,
- compressing the purified biogas to a pressure of 100-350 bara to form a compressed fuel, and
- using the compressed fuel having a methane content of 30 mol% or more and a carbon dioxide content of 10 mol% or more as a fuel for a combustion engine.

2. Process according to claim 1, wherein the carbon dioxide content in the purified biogas is 15 mol% or more, such as 20-45 mol%.

3. Process according to claim 1 or 2, wherein 75 % or less of a carbon dioxide content of the biogas is removed, such as 50 % or less or 25 % or less.

4. Process according to any one of claims 1-3, wherein essentially no carbon dioxide is removed from the biogas.

5. Process according to any one of claims 1-4, wherein the fuel comprises a molar ratio between methane to carbon dioxide of 90 : 10 to 50 : 50, such as 85 : 15 to 55 : 45, or 80 : 20 to 60 : 40.

6. Process according to any one of claims 1-5, wherein the removing comprises one or more selected from adsorption on activated carbon, chilling, temperature swing adsorption, pressure swing adsorption, amine swing absorption, scrubbing, cryogenic separation, and membrane separation, preferably the removing comprises adsorption on activated carbon, chilling and temperature swing adsorption.

7. Process according to any one of claims 1-6, wherein the one or more components that are removed from the biogas are selected from the group consisting of halogen compounds, nitrogen compounds, silicon compounds, sulphur compounds and water.

8. Process according to claim 7, wherein said one or more components comprise one or more silicon compounds, preferably one or more siloxanes

9. Process according to claim 8, wherein said one or more components further comprise water.

10. Process according to any one of claims 1-9, wherein the purified biogas comprises 10 ppm by weight or less of siloxanes.

11. Process according to any one of claims 1-10, wherein the purified biogas comprises
- 5 ppm by weight or less of hydrogen sulphide; and/or
- 30 ppm by weight or less of water; and/or
- 30-60 mol% or more of carbon dioxide; and/or
- 40 mol% or more of methane.

12. Process according to any one of claims 1-11, wherein the purified biogas is compressed to a pressure of 110-330 bara, such as 130-300 bara.

13. Process according to any one of claims 1-12, wherein the compressed fuel is in a supercritical state.

14. Process according to any one of claims 1-13, wherein at least part of the biogas originates from a natural process or an industrial process.

15. Process according to claim 14, wherein the natural process includes the breakdown of biogenic material, wherein preferably the biogenic material comprises manure, plant material, food material, and/or waste.

## Patentansprüche

1. Verfahren zur Herstellung eines verdichteten Brennstoffs, umfassend:
- Bereitstellen eines Biogases,
- Entfernen einer oder mehrerer Komponenten aus dem Biogas, um ein gereinigtes Biogas zu erhalten, wobei das gereinigte Biogas einen Methangehalt von 30 Mol-% oder mehr und einen Kohlendioxidgehalt von 10 Mol-% oder mehr hat,
- Verdichten des gereinigten Biogases auf einen Druck von 100 bis 350 bar, um einen verdichteten Brennstoff zu bilden, und
- Verwenden des verdichteten Brennstoffs mit einem Methangehalt von 30 Mol-% oder mehr und einem Kohlendioxidgehalt von 10 Mol-% oder mehr als Brennstoff für einen Verbrennungsmotor.

2. Verfahren nach Anspruch 1, wobei der Kohlendioxidgehalt im gereinigten Biogas 15 Mol-% oder mehr ist, beispielsweise 20 bis 45 Mol-%.

3. Verfahren nach Anspruch 1 oder 2, wobei 75 % oder weniger des Kohlendioxidgehalts des Biogases entfernt werden, beispielsweise 50 % oder weniger oder 25 % oder weniger.

4. Verfahren nach einem der Ansprüche 1 bis 3, wobei im Wesentlichen kein Kohlendioxid aus dem Biogas entfernt wird.

5. Verfahren nach einem der Ansprüche 1 bis 4, wobei der Brennstoff ein Molverhältnis von Methan zu Kohlendioxid von 90: 10 bis 50: 50, beispielsweise 85: 15 bis 55: 45 oder 80: 20 bis 60: 40, umfasst.

6. Verfahren nach einem der Ansprüche 1 bis 5, wobei das Entfernen ein oder mehrere umfasst, ausgewählt aus Adsorption an Aktivkohle, Abkühlen, Temperaturschwankungsadsorption, Druckschwankungsadsorption, Aminschwankungsabsorption, Waschen, kryogener Trennung und Membrantrennung, wobei das Entfernen vorzugsweise Adsorption an Aktivkohle, Abkühlen und Temperaturschwankungsadsorption umfasst.

7. Verfahren nach einem der Ansprüche 1 bis 6, wobei die eine oder mehreren Komponenten, die aus dem Biogas entfernt werden, ausgewählt sind aus der Gruppebestehend aus Halogenverbindungen, Stickstoffverbindungen, Siliziumverbindungen, Schwefelverbindungen und Wasser.

8. Verfahren nach Anspruch 7, wobei die eine oder mehreren Komponenten eine oder mehrere Siliciumverbindungen, vorzugsweise ein oder mehrere Siloxane, umfassen.

9. Verfahren nach Anspruch 8, wobei die eine oder mehreren Komponenten ferner Wasser umfassen.

10. Verfahren nach einem der Ansprüche 1 bis 9, wobei das gereinigte Biogas 10 Gew.-ppm oder weniger Siloxane umfasst.

11. Verfahren nach einem der Ansprüche 1 bis 10, wobei das gereinigte Biogas Folgendes umfasst
- 5 Gew.-ppm oder weniger Schwefelwasserstoff; und/oder
- 30 Gew.-ppm oder weniger Wasser; und/oder
- 30 bis 60 Mol-% oder mehr Kohlendioxid; und/oder
- 40 Mol-% oder mehr Methan.

12. Verfahren nach einem der Ansprüche 1 bis 11, wobei das gereinigte Biogas auf einen Druck von 110 bis 330 bar, beispielsweise 130 bis 300 bar, verdichtet wird.

13. Verfahren nach einem der Ansprüche 1 bis 12, wobei sich der verdichtete Brennstoff in einem überkritischen Zustand ist.

14. Verfahren nach einem der Ansprüche 1 bis 13, wobei zumindest ein Teil des Biogases aus einem natürlichen Prozess oder einem industriellen Prozess stammt.

15. Verfahren nach Anspruch 14, wobei der natürliche Prozess den Abbau von biogenem Material einschließt, wobei das biogene Material vorzugsweise Gülle, Pflanzenmaterial, Lebensmittel und/oder Abfall umfasst.

## Revendications

1. Procédé de préparation d'un carburant comprimé, comprenant :
- la fourniture d'un biogaz,
- l'élimination d'un ou plusieurs composants dans le biogaz pour que soit obtenu un biogaz purifié, lequel biogaz purifié a une teneur en méthane de 30 % en moles ou plus et une teneur en dioxyde de carbone de 10 % en moles ou plus,
- la compression du biogaz purifié jusqu'à une pression de 100 à 350 bars absolus pour former un carburant comprimé, et
- l'utilisation du carburant comprimé ayant une teneur en méthane de 30 % ou plus et une teneur en dioxyde de carbone de 10 % ou plus en tant que carburant pour un moteur à combustion.

2. Procédé selon la revendication 1, dans lequel la teneur en dioxyde de carbone du biogaz purifié est de 15 % en moles ou plus, telle que 20 à 45 % en moles.

3. Procédé selon la revendication 1 ou 2, dans lequel 75 % ou moins, tels que 50 % ou moins ou 25 % ou moins, de la teneur en dioxyde de carbone du biogaz, sont éliminés.

4. Procédé selon l'une quelconque des revendications 1 à 3, dans lequel pratiquement pas de dioxyde de carbone n'est éliminé du biogaz.

5. Procédé selon l'une quelconque des revendications 1 à 4, dans lequel le carburant comprend un rapport molaire du méthane au dioxyde de carbone de 90/10 à 50/50, tel que 85/15 à 55/45, ou 80/20 à 60/40.

6. Procédé selon l'une quelconque des revendications 1 à 5, dans lequel l'élimination comprend un ou plusieurs choisis parmi une adsorption sur du charbon activé, un séchage par refroidissement, une adsorption à température modulée, une adsorption à pression modulée, une absorption aux amines, une épuration par lavage, une séparation cryogénique, et une séparation sur membrane, de préférence l'élimination comprend une adsorption sur du charbon activé, un séchage par refroidissement, et une adsorption à température modulée.

7. Procédé selon l'une quelconque des revendications 1 à 6, dans lequel les un ou plusieurs composants qui sont éliminés du biogaz sont choisis dans le groupe constitué par les composés halogénés, les composés azotés, les composés siliconés, les composés soufrés, et l'eau.

8. Procédé selon la revendication 7, dans lequel lesdits un ou plusieurs composants comprennent un ou plusieurs composés siliconés, de préférence un ou plusieurs siloxanes.

9. Procédé selon la revendication 8, dans lequel lesdits un ou plusieurs composants comprennent en outre de l'eau.

10. Procédé selon l'une quelconque des revendications 1 à 9, dans lequel le biogaz purifié comprend 10 ppm en poids ou moins de siloxanes.

11. Procédé selon l'une quelconque des revendications 1 à 10, dans lequel le biogaz purifié comprend
- 5 ppm en poids ou moins de sulfure d'hydrogène ; et/ou
- 30 ppm en poids ou moins d'eau ; et/ou
- 30 à 60 % en moles ou plus de dioxyde de carbone ; et/ou
- 40 % en moles ou plus de méthane.

12. Procédé selon l'une quelconque des revendications 1 à 11, dans lequel le biogaz purifié est comprimé jusqu'à une pression de 110 à 330 bars absolus, telle que 130 à 300 bars absolus.

13. Procédé selon l'une quelconque des revendications 1 à 12, dans lequel le carburant comprimé est dans un état supercritique.

14. Procédé selon l'une quelconque des revendications 1 à 13, dans lequel au moins une partie du biogaz provient d'un procédé naturel ou d'un procédé industriel.

15. Procédé selon la revendication 14, dans lequel le procédé naturel comprend la décomposition de matériau biogénique, dans lequel de préférence le matériau biogénique comprend du fumier, une matière végétale, une matière alimentaire, et/ou des déchets.
